(19) Europäisches Patentamt

European Patent Office

Office européen des brevets

(11) **EP 1 127 928 B1**

(12) **EUROPÄISCHE PATENTSCHRIFT**

(45) Veröffentlichungstag und Bekanntmachung des Hinweises auf die Patenterteilung:
**28.04.2004 Patentblatt 2004/18**

(51) Int Cl.⁷: **C09D 175/04**, C08G 18/28, C08G 18/62, C08G 18/73, C08G 18/79

(21) Anmeldenummer: **01102747.1**

(22) Anmeldetag: **08.02.2001**

(54) **Acylharnstoffgruppen enthaltende Polyisocyanatgemische**

Polyisocyanate mixtures containing acyl-urea groups

Mélanges de polyisocyanates contenant des groupes acyl-urée

(84) Benannte Vertragsstaaten:
**AT BE CH CY DE DK ES FI FR GB GR IE IT LI LU MC NL PT SE TR**

(30) Priorität: **21.02.2000 DE 10007820**

(43) Veröffentlichungstag der Anmeldung:
**29.08.2001 Patentblatt 2001/35**

(73) Patentinhaber: **Bayer MaterialScience AG
51368 Leverkusen (DE)**

(72) Erfinder:
• **Danielmeier, Karsten, Dr.
Bethel Park, PA 15102 (US)**
• **Laas, Hans-Josef, Dr.
50733 Köln (DE)**
• **Brahm, Martin, Dr.
51519 Odenthal (DE)**
• **Pires, Paul, Dr.
51373 Leverkusen (DE)**
• **Noble, Karl-Ludwig, Dr.
51467 Bergisch Gladbach (DE)**
• **Reyer, Robert
47918 Tönisvorst (DE)**
• **Blümel, Burkhard
50765 Köln (DE)**

(56) Entgegenhaltungen:
EP-A- 0 207 414          EP-A- 0 625 506
DE-A- 2 436 740          DE-A- 4 325 014

**Beschreibung**

Die Erfindung betrifft Acylharnstoffgruppen enthaltende, wasserdispergierbare Polyisocyanatgemische, ein Verfahren zu ihrer Herstellung und ihre Verwendung als Ausgangskomponente bei der Herstellung von Polyurethankunststoffen, insbesondere als Vernetzer für wasserlösliche oder -dispergierbare Lackbindemittel oder -bindemittelkomponenten mit gegenüber Isocyanatgruppen reaktionsfähigen Gruppen.

Vor dem Hintergrund einer zunehmend strengeren Umweltgesetzgebung gewannen in den letzten Jahren wasserdispergierbare Polyisocyanate für verschiedene Anwendungsgebiete an Bedeutung.

Eine besondere Rolle spielen wasserdispergierbare Polyisocyanate heute als Vernetzerkomponenten für wasserverdünnbare Zweikomponenten-Polyurethan(2K-PUR)-Lacke. In Kombination mit wäßrigen Polyoldispersionen gestatten sie die Formulierung lösemittelfreier Lacksysteme, die bereits bei Raumtemperatur zu qualitativ hochwertigen Beschichtungen aushärten, die hinsichtlich Lösemittel- und Chemikalienbeständigkeit oder mechanischer Belastbarkeit konventionellen Lacken in nichts nachstehen (vgl. z. B. EP-A 358 979, EP-A 469 389, EP-A 496 210, EP-A 542 105, EP-A 543 228, EP-A 562 282, EP-A 562 436, EP-A 583 728, DE-A 41 29 951, DE-A 42 26 242, DE-A 42 26 243 oder DE-A 42 26 270).

Bedeutung besitzen wasserdispergierbare Polyisocyanatzubereitungen daneben auch als Zusatzmittel für wäßrige Dispersionsklebstoffe. Mit ihrer Hilfe lassen sich beispielsweise die Wärmebeständigkeit und Wasserfestigkeit von Verklebungen unterschiedlicher Materialien erheblich verbessern (vgl. z. B. EP-A 61 628 und EP-A 206 059).

Wasserdispergierbare Polyisocyanate finden außerdem Verwendung als Vernetzerkomponenten für wäßrige Dispersionen in der Textilausrüstung (EP-A 560 161 oder WO 95/30045) oder in formaldehydfreien Textildruckfarben (EP-A 571 867 oder DE-A 195 33 218) und eignen sich darüberhinaus beispielsweise auch als Hilfsmittel zur Naßverfestigung von Papier (EP-A 564 912, EP-A 582 166, EP-A 707 113, WO 96/20309 und WO 97/04169).

In der Praxis haben sich für all diese Anwendungsgebiete nichtionische, mit Hilfe von Polyethern hydrophilmodifizierte Polyisocyanate durchgesetzt. Die Herstellung solcher wasserdispergierbaren Polyisocyanate ist in einer Reihe von Veröffentlichungen beschrieben.

Nach der Lehre der DE-A 24 15 435 stellen beispielsweise Urethane aus organischen, insbesondere aromatischen Polyisocyanaten und mindestens 5 Ethylenoxideinheiten aufweisenden Polyethylenglykolmonoalkylethern oberflächenaktive Substanzen dar, die nach der GB-A 1 444 933 und der DE-A 29 08 844 die Herstellung stabiler wäßriger Emulsionen aromatischer Polyisocyanate ermöglichen.

Durch Umsetzung mit Alkylenoxidpolyethern hydrophil modifizierte aromatische Polyisocyanate sind auch aus den EP-A'en 61 628 und 95 594 bekannt. In Form wäßriger Emulsionen finden diese Produkte insbesondere im Klebstoffbereich Verwendung.

Wasserdispergierbare Zubereitungen (cyclo)aliphatischer Polyisocyanate sind Gegenstand der EP-A 206 059. Sie enthalten als Emulgatoren Umsetzungsprodukte aus Polyisocyanaten mit ein- oder mehrwertigen Polyalkylenoxidalkoholen, bestehend aus mindestens einer, mindestens 10 Ethylenoxideinheiten aufweisenden Polyetherkette, und dienen ebenfalls als Zusatzmittel für wäßrige Klebstoffe.

Die EP-A 516 277 beschreibt die Hydrophilierung spezieller, tertiär gebundene Isocyanatgruppen aufweisender Polyisocyanate durch Umsetzung mit einwertigen Polyalkylenoxidpolyethern und die Verwendung dieser Produkte als Vernetzerkomponente für wäßrige Beschichtungsmittel.

Für hochwertige lichtechte Lackanwendungen haben sich insbesondere die in der EP-B 540 985 und der US-A 5 200 489 beschriebenen, durch Urethanisierung aliphatischer und/oder cycloaliphatischer Lackpolyisocyanate mit kurzkettigen, im statistischen Mittel weniger als 10 Ethylenoxideinheiten aufweisenden Polyethylenoxidpolyetheralkoholen erhältlichen Polyisocyanatgemische bewährt.

Auch die aus der EP-A 645 410 und EP-A 680 983 als Vernetzer für wäßrige Holzund Möbellacke bekannten wasserdispergierbaren Polyisocyanate auf Basis von 2,4(6)-Diisocyanatotoluol (TDI) bzw. Gemischen aus TDI und 1,6-Diisocyanatohexan (HDI) enthalten als hydrophile Bestandteile Urethane aus Polyisocyanat und monofunktionellen Polyethylenoxidpolyetheralkoholen.

Neben diesen rein nichtionisch hydrophilierten, Polyetherurethane enthaltenden Polyisocyanaten wurden auch Polyether-modifizierte wasserdispergierbare Polyisocyanate beschrieben, die zur Verbesserung der Emulgierbarkeit oder zur Erzielung spezieller Effekte zusätzlich noch ionische Gruppen, beispielsweise Sulfonatgruppen (vgl. z. B. EP 703 255) oder Amino- bzw. Ammoniumgruppen (vgl. z. B. EP-A 582 166 und EP-A 707 113), aufweisen. Solche ionisch/nichtionisch-modifizierte Polyisocyanate sind für Lackanwendungen in der Regel weniger geeignet. Sie kommen vorzugsweise in der umweltfreundlichen Textilausrüstung bzw. als Papiernaßfestmittel zum Einsatz.

Trotz ihrer breiten Marktakzeptanz für die unterschiedlichsten Anwendungen weisen die Polyetherurethanmodifizierten wasserdispergierbaren Polyisocyanate des Standes der Technik eine Reihe prinzipieller Nachteile auf.

So lassen sich wasserdispergierbare Polyisocyanate, die unter Verwendung höhermolekularer Polyetheralkohole, beispielsweise im Falle reiner Polyethylenoxidpolyether bereits ab einem mittleren Molekulargewicht von ca. 700, hergestellt wurden, aufgrund eines sehr hohen während der Dispergierung zu überwindenden Viskositätsmaximums oftmals nur unter Anwendung erheblicher Scherkräfte (z.B. Hochgeschwindigkeitsrührer) homogen in wäßrige Medien einarbeiten. Zudem neigen solche Produkte, insbesondere bei hohen Emulgatorgehalten, wie sie zum Erreichen besonders feinteiliger, sedimentationsstabiler Dispersionen erforderlich sind, häufig zum Kristallisieren.

Unter Verwendung kürzerer Polyetherketten lassen sich hingegen wasserdispergierbare Polyisocyanate erhalten, die sich sehr leicht bereits von Hand zu stabilen Dispersionen in Wasser einrühren lassen und selbst bei hohen Hydrophilierungsgraden, d. h. bei hohen Gehalten an Ethylenoxideinheiten, keinerlei Kristallisationstendenz zeigen. Aufgrund des relativ niedrigen Molekulargewichtes der zur Modifizierung eingesetzten Polyalkylenoxidpolyether nehmen dabei allerdings mit steigendem Hydrophilierungsgrad sowohl der Gehalt an Isocyanatgruppen als auch die mittlere Isocyanatfunktionalität stetig ab. In der Praxis sind aber für die Mehrzahl der obengenannten Anwendungsgebiete, beispielsweise als Vernetzerkomponente für Lacke und Beschichtungen, gerade hochhydrophilierte besonders feinteilig zu emulgierende Polyisocyanate mit hohen NCO-Gehalten und möglichst hoher Funktionalität erwünscht.

Weiterhin weisen Filme aus wäßrigen 2K-PUR-Lacken auf der Basis von Polyetherurethan modifizierten wasserdispergierbaren Polyisocyanaten, eine schlechte Antrocknung, erkennbar an einer langsamen Härteentwicklung auf, und sind daher nicht für alle Anwendungen geeignet.

Aufgabe der vorliegenden Erfindung war es daher, neue wasserdispergierbare Polyisocyanatgemische zur Verfügung zu stellen, die für den Einsatz in sämtlichen obengenannten Anwendungsgebieten hydrophiler Polyisocyanate, insbesondere als Ausgangskomponente zur Herstellung von Polyurethankunststoffen und vor allem als Vernetzer für wäßrige Bindemittel oder Bindemittelkomponenten in Beschichtungssystemen geeignet sind, ohne mit den genannten Nachteilen der wasserdispergierbaren Polyisocyanate des Standes der Technik behaftet zu sein.

Diese Aufgabe konnte mit der Bereitstellung der nachstehend näher beschriebenen erfindungsgemäßen Polyisocyanatgemische bzw. des Verfahrens zu ihrer Herstellung gelöst werden. Die nachstehend näher beschriebenen erfindungsgemäßen Polyisocyanatgemische basieren auf der überraschenden Beobachtung, dass die Umsetzung aus mindestens zwei Diisocyanatmolekülen bestehenden Polyisocyanatmolekülen mit Säuregruppen enthaltenden Polyalkylenoxidpolyethern unter $CO_2$-Abscheidung wasserdispergierbare Polyisocyanatgemische liefert, die sich bereits bei deutlich niedrigeren Hydrophilierungsgraden erheblich leichter und feinteiliger in wäßrige Systeme einrühren lassen als wasserdispergierbare Polyisocyanate des Standes der Technik, bei denen die Polyetherketten über Urethanbindungen mit dem Polyisocyanat verknüpft sind. Das erfindungsgemäße Verfahren gestattet die Herstellung kristallisationsstabiler hydrophiler Polyisocyanate, die sich gegenüber den bisher bekannten, Polyetherketten enthaltenden Polyisocyanatgemischen bei gleicher oder sogar besserer Wasserdispergierbarkeit durch einen höheren Gehalt an Isocyanatgruppen und eine höhere Funktionalität auszeichnen und darüberhinaus bei der Verwendung als Vernetzerkomponente in wässrigen 2K-PUR-Lacken zu einer deutlich verbesserten Antrocknung führen.

In einigen Veröffentlichungen (z. B. A.H.M. Schotman, W.J. Mijs, *Recl*. *Trav*. *Chim*. *Pay-Bas*, **1992,** *111*, 88-91; P. Babusiaux, R. Longeray, J. Dreux, *Liebigs Ann*. *Chem*. **1976,** 487-495, Deutsche Auslegeschrift 1 230 778, DE-A 2 436 740 und die in diesen Arbeiten zitierten Literatur) ist die Bildung von Acylharnstoffgruppen aufweisenden Isocyanatpolyadditionsprodukten z. B. durch direkte Umsetzung von Isocyanaten mit Carbonsäuren oder über eine Carbodiimidzwischenstufe beschrieben. In EP-A 207 414 wird die Herstellung von wässrigen Dispersionen mit in der Polymerkette eingebauten Acylharnstofffragmenten beschrieben. Jedoch konnte der Fachmann keiner der obengenannten Veröffentlichungen irgendeinen konkreten Hinweis darauf entnehmen, dass sich unter $CO_2$-Abscheidung hergestellte Umsetzungsprodukte von Polyisocyanaten mit Carbonsäuregruppen enthaltenden Polyalkylenoxidpolyethem erheblich leichter und feinteiliger zu stabilen Emulsionen in Wasser einrühren lassen als Polyisocyanatgemische, die nach den bekannten Verfahren des Standes der Technik unter Urethanisierungsbedingungen hergestellt wurden.

Gegenstand der vorliegenden Erfindung sind wasserdispergierbare Polyisocyanatgemische auf Basis aliphatischer, cycloaliphatischer, araliphatischer und/oder aromatischer Diisocyanate und mindestens eine Carbonsäuregruppe enthaltenden Polyalkylenoxidpolyethem dadurch gekennzeichnet, dass die Verknüpfung des hydrophilierenden Reagenzes durch Reaktion zwischen Isocyanat und der Carbonsäuregruppe unter anteiliger Ausbildung von acylierten Harnstoffgruppen und Amidbindungen erfolgt.

Gegenstand der Erfindung ist auch ein Verfahren zur Herstellung dieser wasserdispergierbaren Polyisocyanatgemische, welches dadurch gekennzeichnet ist, dass man

A) eine Polyisocyanatkomponente mit aliphatisch, cycloaliphatisch, araliphatisch und/oder aromatisch gebundenen Isocyanatgruppen und
B) einem mindestens eine Carbonsäuregruppe enthaltenden Polyalkylenoxidpolyether

so miteinander umsetzt, dass die Verknüfung des hydrophilierenden Reagenzes durch Reaktion zwischen Isocyanat und Säure unter anteiliger Ausbildung von acylierten Harnstoffgruppen und Amidbindungen stattfindet.

Gegenstand der Erfindung ist auch die Verwendung dieser Polyisocyanatgemische als Ausgangskomponenten bei der Herstellung von Polyurethankunststoffen.

Gegenstand ist schließlich auch die Verwendung dieser Polyisocyanatgemische als Vernetzer für wasserlösliche oder -dispergierbare Lackbindemittel oder Lackbindemittelkomponenten bei der Herstellung von Überzügen unter Verwendung von wäßrigen Beschichtungsmitteln auf Basis derartiger Bindemittel oder Bindemittelkomponenten.

Die beim erfindungsgemäßen Verfahren einzusetzende Komponente A) weist eine (mittlere) NCO-Funktionalität von 2,0 bis 5,0, vorzugsweise von 2,3 bis 4,5, einen Gehalt an Isocyanatgruppen von 8,0 bis 27,0 Gew.-%, vorzugsweise 14,0 bis 24,0 Gew.-% auf. Der Gehalt an monomeren Diisocyanaten der beim erfindungsgemäßen Verfahren eingesetzten Komponente A) ist bevorzugt kleiner als 1 Gew.-%, besonders bevorzugt kleiner als 0,5 Gew.-%. Sie besteht aus mindestens einem organischen Polyisocyanat mit aliphatisch, cycloaliphatisch, araliphatisch und/oder aromatisch gebundenen Isocyanatgruppen.

Es handelt sich bei den Polyisocyanaten bzw. Polyisocyanatgemischen der Komponente A) um beliebige, durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, den DE-A 16 70 666, 19 54 093, 24 14 413, 24 52 532, 26 41 380, 37 00 209, 39 00 053 und 39 28 503 oder den EP-A 336 205, 339 396 und 798 299 beispielhaft beschrieben sind.

Geeignete Diisocyanate zur Herstellung solcher Polyisocyanate sind grundsätzlich solche des Molekulargewichtsbereichs 140 bis 400 mit aliphatisch, cycloaliphatisch, araliphatisch und/oder aromatisch gebundenen Isocyanatgruppen, wie z. B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4 (3)isocyanatomethylcyclohexan, Bis-(isocyanatomethyl)-norbornan, 1,3- und 1,4-Bis-(2-isocyanato-prop-2-yl)-benzol (TMXDI), 2,4-und 2,6-Diisocyanatotoluol (TDI), 2,4'- und 4,4'-Diisocyanatodiphenylmethan, 1,5-Diisocyanatonaphthalin oder beliebige Gemische solcher Diisocyanate.

Bevorzugt handelt es sich bei den Ausgangskomponenten A) um Polyisocyanate oder Polyisocyanatgemische der genannten Art mit ausschließlich aliphatisch und/oder cycloaliphatisch gebundenen Isocyanatgruppen.

Besonders bevorzugte Ausgangskomponenten A) sind Polyisocyanate bzw. Polyisocyanatgemische mit Isocyanuratstruktur auf Basis von HDI, IPDI und/oder 4,4'-Diisocyanatodicyclohexylmethan.

Ganz besonders bevorzugte Ausgangskomponenten A) sind Polyisocyanate bzw. Polyisocyanatgemische mit Isocyanuratstruktur auf Basis von HDI.

Bei der Komponente B) handelt es sich um mindestens eine Carbonsäuregruppe enthaltende, im statistischen Mittel bevorzugt 5 bis 35, besonders bevorzugt 7 bis 30 Ethylenoxideinheiten pro Molekül aufweisende Polyalkylenoxidpolyether.

Diese können zum Beispiel durch die Umsetzung von bevorzugt einwertigen, Polyalkylenoxidpolyetheralkoholen mit cyclischen Carbonsäureanhydriden und/oder Dicarbonsäuremonochloriden oder durch Umesterung von partiell veresterten Di- oder höherfunktionellen Carbonsäuren und/oder durch partielle Veresterung von Di- oder höherfunktionellen Carbonsäuren mit bevorzugt einwertigen, Polyalkylenoxidpolyetheralkoholen hergestellt werden.

Selbstverständlich können auch auf andere Weise hergestellte mindestens eine Carbonsäuregruppe enthaltende Polyalkylenoxidpolyether im erfindungsgemäßen Verfahren eingesetzt werden.

Bei den zur Herstellung der mindestens eine Carbonsäuregruppe enthaltende Polyalkylenoxidpolyether verwendeten Polyalkylenoxidpolyetheralkohole handelt es sich um einwertige, bevorzugt im statistischen Mittel 5 bis 35, besonders bevorzugt 7 bis 30 Ethylenoxideinheiten pro Molekül aufweisende Polyalkylenoxidpolyetheralkohole, wie sie in an sich bekannter Weise durch Alkoxylierung geeigneter Startermoleküle zugänglich sind (siehe z. B. Ullmanns Encyclopädie der technischen Chemie, 4. Auflage, Band 19, Verlag Chemie, Weinheim S. 31 - 38).

Als geeignete Startermoleküle zur Herstellung von Polyalkylenoxidpolyetheralkoholen die im erfindungsgemäßen Verfahren zum Beispiel mit Carbonsäureanhydriden zu den mindestens eine Carbonsäuregruppe enthaltenden Polyalkylenoxidpolyethern umgesetzt werden können, seien hier beispielhaft genannt: gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan, oder Tetrahydrofurfurylalkohol; ungesättigte Alkohole wie Allylalkohol, 1,1-Dimethyl-allylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Dibutylamin, Diisobutylamin, Bis-(2-ethylhexyl)-amin, N-Methyl- und N-Ethylcyclohexylamin oder Dicyclohexylamin sowie heterocylische sekundäre Amine wie Morpholin, Pyrrolidin, Piperidin oder 1H-Pyrazol.

Bevorzugte Startermoleküle sind gesättigte Monoalkohole mit bis zu vier Kohlenstoffatomen. Besonders bevorzugte Startermoleküle sind Methanol und Butanol.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den zur Herstellung mindestens eine Carbonsäuregruppe enthaltenden Polyalkylenoxidpolyethem B) verwendeten Polyalkylenoxidpolyetheralkoholen handelt es sich entweder um reine Polyethylenoxidpolyetheralkohole oder gemischte Polyalkylenoxidpolyetheralkohole, deren Alkylenoxideinheiten zu mindestens 40 mol-%, bevorzugt zu mindestens 50 mol-% aus Ethylenoxideinheiten bestehen. Ganz besonders bevorzugt für das erfindungsgemäße Verfahren sind gemischte Polyethylenpolypropylenglycolmonobutyletheralkohole, die im statistischen Mittel 7 bis 30, ganz besonders bevorzugt 7 bis 25 Ethylenoxideinheiten aufweisen.

Geeignete cyclische Carbonsäureanhydride für die Umsetzung mit den Polyalkylenoxidpolyetheralkoholen zur Bildung der mindestens eine Carbonsäuregruppe enthaltenden Polyalkylenoxidpolyether sind zum Beispiel Bernsteinsäureanhydrid, Maleinsäureanhydrid, Phthalsäureanhydrid, Hexahydrophthalsäureanhydrid, Tetrahydrophthalsäureanhydrid. Aber auch Carbonsäureanhydride und substituierte cyclische Carbonsäureanhydride wie sie durch *Diels-Alder*-Reaktion beispielsweise von Maleinsäureanhydrid oder anderen geeigneten eine Anhydridgruppe enthaltenen Enen mit Cyclopentadien oder Hexachlorcyclopentadien oder anderen geeigneten Dienen erhalten werden sind geeigenet. Gegebenenfalls können die Produkte der *Diels-Alder*-Reaktion selbstverständlich auch einer nachfolgenden Hydrierung der Doppelbindung unter geeigneten Bedingungen unterzogen werden und dann zur Bildung der mindestens eine Carbonsäuregruppe enthaltenden Polyalkylenoxidpolyether eingesetzt werden.

Geeignete Di- oder höherfunktionelle Carbonsäuren für Bildung der mindestens eine Carbonsäuregruppe enthaltenden Polyalkylenoxidpolyether sind zum Beispiel: Bemsteinsäure, Adipinsäure, Isophthalsäure, Phthalsäure, Terephthalsäure, Tetrahydrophthalsäure, Hexahydrophthalsäure, Trimisinsäure, Trimellitsäure.

Dabei können die Di- oder höherfunktionellen Carbonsäuren entweder direkt unter veresternden Bedingungen oder als partiell veresterte Verbindungen durch Umesterung zu den entsprechenden mindestens eine Carbonsäuregruppe enthaltenden Polyalkylenoxidpolyethern umgesetzt werden. Insbesondere die genannten Dicarbonsäuren können selbstverständlich auch als Monosäurechloride zur Bildung der mindestens eine Carbonsäuregruppe enthaltenden Polyalkylenoxidpolyether eingesetzt werden.

Die als Komponente B) verwendeteten, mindestens eine Carbonsäuregruppe enthaltenden Polyethylenoxidpolyether können weitere funktionelle Gruppen enthalten gegebenenfalls, zur weiteren Erhöhung der Funktionalität auch funktionelle Gruppen, die zur Reaktion mit Isocyanaten befähigt sind, beispielsweise Hydroxygruppen oder Aminogruppen. Solche zusätzlich funktionalisierten mindestens eine Carbonsäuregruppe enthaltenden Polyethylenoxidpolyether werden im erfindungsgemäßen Verfahren, wenn überhaupt, so eingesetzt, dass die Verknüpfung des hydrophilierenden Reagenzes zu >50 %, bevorzugt >80 % durch Reaktion zwischen Isocyanat und Säure unter anteiliger Ausbildung von acylierten Harnstoffgruppen und Amidbindungen erfolgt.

Bevorzugt sind aber solche mindestens eine Carbonsäuregruppe enthaltenden Polyethylenoxidpolyether die neben den Carbonsäuregruppen keine weiteren zur Reaktion mit Isocyanaten befähigten funktionellen Gruppen enthalten. Ganz besonders bevorzugt sind solche mindestens eine Carbonsäuregruppe enthaltenden Polyethylenoxidpolyether, die genau eine Carbonsäuregruppe enthalten.

Gegebenenfalls, jedoch weniger bevorzugt, können beim erfindungsgemäßen Verfahren zusätzlich zu den genannten mindestens eine Carbonsäuregruppe enthaltenden Polyethylenoxidpolyethern B) in untergeordneten Mengen noch weitere gegenüber Isocyanaten reaktive Verbindungen mit anionischen oder kationischen Gruppen, beispielsweise mit Carboxylat-, Sulfonat- oder Ammoniumgruppen, oder auch einfache Polyalkylenoxidpolyetheralkohole, bevorzugt monofunktionelle, als hydrophile Aufbaukomponenten mitverwendet werden. Solche zusätzlichen Hydrophilierungsreagentien werden im erfindungsgemäßen Verfahren, wenn überhaupt, so eingesetzt, dass die Verknüpfung der hydrophilierenden Reagentien zu >50 % bevorzugt zu >80 % durch Reaktion zwischen Isocyanat und Säure unter anteiliger Ausbildung von acylierten Harnstoffgruppen und Amidbindungen erfolgt.

Zur Durchführung des erfindungsgemäßen Verfahrens werden die Ausgangskomponenten A) und B) bei Temperaturen von 25 bis 240°C, vorzugsweise 90 bis 150°C, bevorzugt unter Einhaltung eines NCO-/COOH-Äquivalent-Verhältnisses von 1,5:1 bis 400:1, so miteinander umgesetzt, dass die Verknüpfung der mindestens eine Carbonsäuregruppe enthaltenden Polyethylenoxidpolyether B) mit der Polyisocyanatkomponente A) durch Reaktion zwischen NCO und COOH-Gruppen unter Abspaltung von $CO_2$ und anteiliger Bildung von Amid und Acylharnstoffgruppen stattfindet. Dabei wird die Reaktion zwischen der Komponente A) und der Komponente B) bevorzugt so durchgeführt, dass die Komponente A) unter Rühren und Einleitung von trockenem Stickstoff vorgelegt wird und die Komponente B) unter Rühren zugegeben wird.

Zur Beschleunigung der Reaktion zwischen den Ausgangskomponeneten A) und B) können beim erfindungsgemäßen Verfahren gegebenenfalls geeignete Katalysatoren, die die Reaktion zwischen NCO und COOH beschleunigen, mitverwendet werden. Hierbei handelt es sich zum Beispiel um die aus der Polyurethanchemie prinzipiell bekannten Katalysatoren wie tert. Amine z. B. Triethylamin, Pyridin, Methylpyridin, Benzyldimethylamin, N,N-Endoethylenpiperazin, N-Methyl-piperidin, Pentamethyldiethylen-triamin, N,N-Dimethylaminocyclohexan, N,N'-Dimethyl-piperazin oder Metallsalze z. B. Eisen(III)-chlorid, Zinkchlorid, Zink-2-ethylcaproat, Zinn(II)-octoat, Zinn(II)-ethylcaproat, Zinn(II)-palmitat, Dibutylzinn(IV)-dilaurat und Molybdänglykolat oder auch um Carbodiimidisierungskatalysatoren wie sie in der einschlägigen Literatur (Dietrich *et al.*, *Angew. Chem.* **1981,** *93,* 855-866) beschrieben sind wie etwa Phospholenoxide. In diesem Fall läuft die Reaktion wie bei A.H.M Schotman und W.J. Mijs, *Recl. Trav. Chim. Pay-Bas*, **1992**, *111*, 88-91 beschrieben ab.

Diese Katalysatoren kommen beim erfindungsgemäßen Verfahren, falls überhaupt, in einer Menge von 0,0001 bis 5 Gew.-% bezogen auf das Gesamtgewicht der Reaktionspartner zum Einsatz.

Der Verlauf der Umsetzung kann beim erfindungsgemäßen Verfahren durch z. B. titrimetrische Bestimmung des NCO-Gehaltes verfolgt werden. Nach Erreichen des angestrebten NCO-Gehaltes, der sich bei vollständigem Umsatz aus Formel [1] ergibt, wird die Reaktion abgebrochen. Dies kann bei der bevorzugten rein thermischen Reaktionsführung beispielsweise durch Abkühlen des Reaktionsgemisches auf Raumtemperatur erfolgen. Bei der weniger bevorzugten Mitverwendung eines Katalysators wird die Umsetzung im allgemeinen aber durch Zugabe geeigneter Katalysatorgifte, beispielsweise für Carbodiimidisierungskatalysatoren den in DE-A 41 17 384 beschriebenen silylierten Säuren oder anderen abgestoppt.

$$NCO\,[\%] = \frac{\Sigma\,val_{\text{Polyisocyanate (Komponente A)}} - 2^* \Sigma\,val_{\text{COOH-Gruppen enthaltende Polyalkylenoxidpolyetheralkohole (Komponente B)}}}{Menge_{\text{Komponente A}}\,[g] + Menge_{\text{Komponente B}}\,[g]} * 4200 \qquad [1]$$

Bei der weniger bevorzugten Verwendung eines Carbodiimidisierungskatalysators kann die Reaktion so durchgeführt werden, dass Komponente A) zunächst anteilig in die entsprechenden Carbodiimide überführt wird, der Katalysator durch Zugabe eines geeigneten Katalysatorgiftes abgestoppt wird und dann die Komponente B) zugegeben wird. Komponente B) kann aber auch zusammen mit dem Katalysator zugegeben werden.

Bei der ebenfalls weniger bevorzugten Verwendung eines anderen Katalysators wird der Katalysator bevorzugt zur Polyisocyanatkomponente A) gegeben oder aber nachträglich zum Gemisch der Komponenten A) und B).

Gewöhnlich sind die Temperaturen, die beim erfindungsgemäßen Verfahren unter Zugabe eines Katalysators verwendet werden niedriger, als beim unkatalysierten Verfahren.

Unter der theoretischen Voraussetzung, dass die mindestens eine Carbonsäuregruppe enthaltenden Polyethylenoxidpolyether mit den Polyisocyanaten unter der vollständigen Bildung von acylierten Harnstoffderivaten abreagiert, kann die NCO-Funktionalität der erfindungsgemäßen Polyisocyanatgemische rechnerisch aus Art und Funktionalität der Ausgangskomponenten nach Formel [2] ermittelt werden. Die erfindungsgemäßen Polyisocyanate haben in diesem Fall in diesem Fall eine mittlere NCO-Funktionalität von vorzugsweise 2,3 bis 9,9, besonders bevorzugt 2,8 bis 5,8.

$$F = \frac{\Sigma\,vol\,NCO - 2^* \Sigma\,val\,COOH}{\Sigma\,(mol\,NCO + mol\,COOH) - 2^* \Sigma\,val\,COOH} \qquad [2]$$

Das erfindungsgemäße Verfahren kann gegebenenfalls in einem geeigneten, gegenüber Isocyanatgruppen inerten Lösemittel durchgeführt werden. Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha®, Solvesso®, Shellsol®, Isopar®, Nappar® und Diasol® im Handel sind, Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton und ε-Methylcaprolacton, aber auch Lösemittel wie Propylenglykoldiacetat, Diethylenglykoldimethylether, Dipropylenglykoldimethylether, Diethylenglykolethylund -butyletheracetat, N-Methylpyrrolidon und N-Methylcaprolactam, oder beliebige Gemische solcher Lösemittel.

Die erfindungsgemäßen Verfahrensprodukte stellen klare, praktisch farblose Polyisocyanatgemische der bereits oben genannten Zusammensetzung dar, die sich leicht, ohne Einsatz hoher Scherkräfte durch bloßes Einrühren in Wasser dispergieren lassen, wobei zum Erhalten sedimentationsstabiler wäßriger Dispersionen bereits ein erheblich niedrigerer Gesamtgehalt an Ethylenoxideinheiten ausreicht, als im Falle von wasserdispergierbaren Polyisocyanatgemischen des Standes der Technik, die durch ausschließliche Urethanisierung mit Polyetheralkoholen hergestellt wurden. Das erfindungsgemäße Verfahren gestattet so die Herstellung kristallisationsstabiler hochhydrophiler Polyisocyanate, die sich gegenüber den bisher bekannten, Polyetherurethane enthaltenden Polyisocyanatgemischen bei gleicher oder sogar besserer Wasserdispergierbarkeit durch einen höheren Gehalt an Isocyanatgruppen und eine höhere Funktionalität auszeichnen.

Die hervorragende Dispergierbarkeit bereits bei niedrigen Ethylenoxidgehalten in Verbindungen mit hohen NCO-Gehalten und -Funktionalitäten stellt insbesondere für die Verwendung der erfindungsgemäßen Polyisocyanatgemische in wäßrigen 2K-PUR-Lacken einen Vorteil dar, da sich auf diese Weise hochvernetzte Beschichtungen erhalten lassen, die neben sehr guter Lösemittel- und Chemikalienbeständigkeit aufgrund des niedrigen Gehaltes an hydrophilen Gruppen insbesondere eine ausgezeichnete Wasserfestigkeit aufweisen. Zudem werden Filme mit einer besseren Antrocknung, erkennbar an einer besseren Härteentwicklung, gebildet als mit hydrophilierten Isocyanaten des Standes der Technik.

Gegebenenfalls können den nach dem erfindungsgemäßen Verfahren hergestellten Polyisocyanatgemischen vor der Emulgierung noch weitere nicht-hydrophilierte Polyisocyanate, insbesondere Lackpolyisocyanate der obengenannten Art oder höherfunktionelle monomere Isocyanate wie zum Beispiel 4-Isocyanatomethyl-1.8-octandiisocyanat zugesetzt werden. Die resultierenden wasserdispergierbaren Polyisocyanatgemische sind dadurch gekennzeichnet, dass die Verknüpfung des hydrophilierenden Reagenzes durch Reaktion zwischen Isocyanat und der Carbonsäuregruppe unter anteiliger Ausbildung von acylierten Harnstoffgruppen und Amidbindungen erfolgt ist, und somit ebenfalls erfindungsgemäße Polyisocyanatgemische vorliegen, da diese im allgemeinen aus Gemischen aus

(i) erfindungsgemäß hydrophil modifizierten Polyisocyanaten und

(ii) unmodifizierten Polyisocyanaten der beispielhaft genannten Art bestehen.

In solchen Mischungen übernehmen die erfindungsgemäßen Verfahrensprodukte die Funktion eines Emulgators für den nachträglich zugemischten Anteil an nichthydrophilen Polyisocyanaten.

Die erfindungsgemäßen Polyisocyanatgemische stellen wertvolle Ausgangsmaterialien zur Herstellung von Polyurethan-Kunststoffen nach dem Isocyanat-Polyadditionsverfahren dar.

Hierzu werden die Polyisocyanatgemische vorzugsweise in Form wäßriger Emulsionen eingesetzt, die in Kombination mit in Wasser dispergierten Polyhydroxylverbindungen im Sinne von wäßrigen Zweikomponenten-Systemen zur Umsetzung gebracht werden können.

Besonders bevorzugt werden die erfindungsgemäßen Polyisocyanatgemische als Vernetzer für in Wasser gelöste oder dispergierte Lackbindemittel oder Lackbindemittelkomponenten mit gegenüber Isocyanatgruppen reaktionsfähigen Gruppen, insbesondere alkoholischen Hydroxylgruppen, bei der Herstellung von Beschichtungen unter Verwendung von wäßrigen Beschichtungsmitteln auf Basis derartiger Bindemittel bzw. Bindemittelkomponenten verwendet. Die Vereinigung des Vernetzers, gegebenenfalls in emulgierter Form, mit den Bindemitteln bzw. Bindemittelkomponenten kann hierbei durch einfaches Verrühren vor der Verarbeitung der Beschichtungsmittel nach beliebigen Methoden oder auch unter Verwendung von Zweikomponenten-Spritzpistolen erfolgen.

In diesem Zusammenhang seien als Lackbindemittel oder Lackbindemittelkomponenten beispielhaft erwähnt: in Wasser gelöste oder dispergierte, Hydroxylgruppen aufweisende Polyacrylate, insbesondere solche des Molekulargewichtsbereichs 1 000 bis 10 000, die mit organischen Polyisocyanaten als Vernetzer wertvolle Zweikomponenten-Bindemittel darstellen oder in Wasser dispergierte, gegebenenfalls Urethan-modifizierte, Hydroxylgruppen aufweisende Polyesterharze der aus der Polyester- und Alkydharzchemie bekannten Art. Prinzipiell sind als Reaktionspartner für die erfindungsgemäßen Polyisocyanatgemische alle in Wasser gelösten oder dispergierten Bindemittel, die gegenüber Isocyanaten reaktive Gruppen aufweisen, geeignet. Hierzu zählen beispielsweise auch in Wasser dispergierte Polyurethane oder Polyharnstoffe, die aufgrund der in den Urethan- bzw. Harnstoffgruppen vorliegenden aktiven Wasserstoffatome mit Polyisocyanaten vernetzbar sind.

Bei der erfindungsgemäßen Verwendung als Vernetzerkomponente für wäßrige Lackbindemittel werden die erfindungsgemäßen Polyisocyanatgemische im allgemeinen in solchen Mengen eingesetzt, die einem Äquivalentverhältnis von NCO-Gruppen zu gegenüber NCO-Gruppen reaktionsfähigen Gruppen, insbesondere alkoholischen Hydroxylgruppen, von 0,5:1 bis 2:1 entsprechen.

Gegebenenfalls können die erfindungsgemäßen Polyisocyanatgemische in untergeordneten Mengen auch nichtfunktionellen wäßrigen Lackbindemitteln zur Erzielung ganz spezieller Eigenschaften, beispielsweise als Additiv zur Haftverbesserung zugemischt werden.

Selbstverständlich können die erfindungsgemäßen Polyisocyanatgemische auch in mit aus der Polyurethanchemie an sich bekannten Blockierungsmitteln blockierter Form in Kombination mit den obengenannten wäßrigen Lackbindemitteln oder Lackbindemittelkomponenten im Sinne von wäßrigen Einkomponenten-PUR-Einbrennsystemen eingesetzt werden. Geeignete Blockierungsmittel sind beispielsweise Malonsäurediethylester, Acetessigester, Acetonoxim, Butanonoxim, ε-Caprolactam, 3,5-Dimethylpyrazol, 1,2,4-Triazol, Dimethyl-1,2,4-triazol, Imidazol oder beliebige Gemische dieser Blockierungsmittel.

Als Untergründe für die mit Hilfe der erfindungsgemäßen Polyisocyanatgemische formulierten wäßrigen Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Im allgemeinen besitzen die mit den erfindungsgemäßen Polyisocyanatgemischen formulierten wäßrigen Beschichtungsmittel, denen gegebenenfalls die auf dem Lacksektor üblichen Hilfs- und Zusatzmittel, wie z. B. Verlaufshilfsmittel, Farbpigmente, Füllstoffe, Mattierungsmittel oder Emulgatoren, einverleibt werden können, schon bei Raumtemperaturtrocknung gute lacktechnische Eigenschaften.

Selbstverständlich lassen sie sich jedoch auch unter forcierten Bedingungen bei erhöhter Temperatur bzw. durch Einbrennen bei Temperaturen bis 260°C trocknen.

Aufgrund ihrer hervorragenden Wasseremulgierbarkeit, die eine homogene, besonders feinteilige Verteilung in wäßrigen Lackbindemitteln ermöglicht, führt die Verwendung der erfindungsgemäßen Polyisocyanatgemische als Vernetzerkomponente für wäßrige Polyurethanlacke zu Beschichtungen mit hervorragenden optischen Eigenschaften, insbesondere hohem Oberflächenglanz, Verlauf und hoher Transparenz.

Neben der bevorzugten Verwendung als Vernetzerkomponenten für wäßrige 2K-PUR-Lacke eignen sich die erfindungsgemäßen Polyisocyanatgemische hervorragend als Vernetzer für wäßrige Dispersionsklebstoffe, Leder- und Textilbeschichtungen oder Textildruckpasten, als AOX-freie Papierhilfsmittel oder auch als Zusatzmittel für mineralische Baustoffe, beispielsweise Beton- oder Mörtelmassen.

**Beispiele**

Alle Prozentangaben beziehen sich auf das Gewicht.

**Ausgangspolyisocyanate**

Polyisocyanat A1)

Iminooxadiazindiongruppen enthaltendes Polyisocyanat auf der Basis von 1,6-Diisocyanatohexan (HDI) mit einem NCO-Gehalt von 23,2 % mit einer mittleren Funktionalität von 3,3 (nach GPC) und einem Gehalt an monomeren HDI von 0,4 %, hergestellt gemäß EP-A 798 299 analog Beispiel 5a.

Polyisocyanat A2)

Isocyanuratgruppen enthaltendes Polyisocyanat auf der Basis von HDI mit einem NCO-Gehalt von 21,5 % mit einer mittleren Funktionalität von 3,5 (nach GPC) und einem Gehalt an monomerem HDI von 0,1 %, hergestellt analog Bsp. 7 der EP-A 330 966.

**Vergleichspolyisocyanate**

Vergleichspolyisocyanat V1)

(Die Reaktionsführung ist analog wie in der EP-A 540 985 für die Bildung von ausschließlich Urethan-modifizierten wasserdispergierbaren Polyisocyanaten beschrieben.)

700 g (3,59 val) des Polyisocyanates A2 werden bei RT unter Rühren und unter trockenem Stickstoff vorgelegt und mit 100 g (0,2 val) eines auf Methanol gestarteten monofunktionellen Polyethylenoxidpolyetheralkohols eines mittleren Molekulargewichtes von 500 g/mol versetzt und anschließend für 3 h auf 100°C erwärmt. Dann kühlt man unter Rühren auf RT ab und erhält ein nahezu farbloses Polyisocyanat mit einem NCO-Wert von 17,8 %.

| | |
|---|---|
| Gew. % Polyetheralkohol bezogen auf die Einsatzstoffe | 12,5 % |
| NCO-Funktionalität (gemäß GPC) | 3,3 |

**Mindestens eine Carbonsäuregruppe enthaltende Polyalkylenoxidpolyether**

Polyalkylenoxidpolyethercarbonsäure P1)

1000 g (10 mol) Bernsteinsäureanhydrid und 5000 g eines auf Methanol gestarteten, monofunktionellen Polyethylenoxidpolyetheralkohols eines mittleren Molekulargewichtes von 500 g/mol werden unter trockenem Stickstoff solange auf 160°C erhitzt bis IR-spektroskopisch kein Anhydrid (Bande bei 1785 cm$^{-1}$) mehr nachweisbar ist. Dann wird noch eine Stunde nachgerührt und abgekühlt. Man erhält eine fast farblose Flüssigkeit.

Kenndaten:

| Viskosität | 190 mPas |
|---|---|
| Säurezahl | 88,1 mg [KOH]/g [Substanz] |

Polyalkylenoxidpolyethercarbonsäure P2)

200 g (2 mol) Bernsteinsäureanhydrid und 2800 g eines auf Butanol gestarteten, monofunktionellen Polyethylenoxidpolyetheralkohols eines mittleren Molekulargewichtes von 1400 g/mol mit einem Anteil von 48 % Propylenoxideinheiten und 52 % Ethylenoxideinheiten werden unter trockenem Stickstoff solange auf 160°C erhitzt bis IR-spektroskopisch kein Anhydrid (Bande bei 1785 cm$^{-1}$) mehr nachweisbar ist. Dann wird noch eine Stunde nachgerührt und abgekühlt. Man erhält eine fast farblose Flüssigkeit.

Kenndaten:

| Viskosität | 440 mPas |
|---|---|
| Säurezahl | 38,4 mg [KOH]/g [Substanz] |

Polyalkylenoxidpolyethercarbonsäure P3)

308,4 g (2 mol) Hexahydrophthalsäureanhydrid und 2800 g eines auf Butanol gestarteten, monofunktionellen Polyethylenoxidpolyetheralkohols eines mittleren Molekulargewichtes von 1400 g/mol mit einem Anteil von 48 % Propylenoxideinheiten und 52 % Ethylenoxideinheiten werden unter trockenem Stickstoff solange auf 140°C erhitzt bis IR-spektroskopisch kein Anhydrid (Bande bei 1785 cm$^{-1}$) mehr nachweisbar ist. Dann wird noch eine Stunde nachgerührt und abgekühlt. Man erhält eine fast farblose Flüssigkeit.

Kenndaten:

| Viskosität | 544 mPas |
|---|---|
| Säurezahl | 37,1 mg [KOH]/g [Substanz] |

**Beispiel 1**

700 g (3,59 val) des Polyisocyanates A2 werden bei 140°C unter Rühren und unter trockenem Stickstoff vorgelegt und mit 100 g (0,16 val) der Polyalkylenoxidpolyethercarbonsäure P1 versetzt. Es setzt eine starke $CO_2$-Entwicklung ein, die nach etwa 2 h nachläßt. Man rührt solange bei der Temperatur, bis der nach Formel [1] theoretisch ermittelte NCO-Wert von 17,2 % erreicht ist. Dann kühlt man langsam unter Rühren auf RT ab und erhält ein nahezu farbloses Polyisocyanat mit einem NCO-Wert von 17,1 %.
Gew. % Polyalkylenoxidpolyethercarbonsäure bezogen auf Einsatzstoffe: 12,5 %
NCO-Funktionalität (gemäß GPC): 3,7

**Beispiel 2**

700 g (3,59 val) des Polyisocyanates A2 werden bei 140°C unter Rühren und unter trockenem Stickstoff vorgelegt und mit 119 g (0,08 val) der Polyalkylenoxidpolyethercarbonsäure P2 versetzt. Es setzt eine starke $CO_2$-Entwicklung ein, die nach etwa 2 h nachläßt. Man rührt solange bei der Temperatur, bis der nach Formel [1] theoretisch ermittelte NCO-Wert von 17,6 % erreicht ist. Dann kühlt man unter Rühren auf RT ab und erhält ein nahezu farbloses Polyisocyanat mit einem NCO-Wert von 17,5 %.
Gew. % Polyalkylenoxidpolyethercarbonsäure bezogen auf Einsatzstoffe: 14,5 %
NCO-Funktionalität (gemäß GPC): 3,6

**Beispiel 3**

700 g (3,59 val) des Polyisocyanates A2 werden bei 140°C unter Rühren und unter trockenem Stickstoff vorgelegt und mit 122,8 g (0.08 val) der Polyalkylenoxidpolyethercarbonsäure P3 versetzt. Es setzt eine starke $CO_2$-Entwicklung ein, die nach etwa 2 h nachläßt nachläßt. Man rührt solange bei der Temperatur, bis der nach Formel [1] theoretisch ermittelte NCO-Wert von 17,6 % erreicht ist. Dann kühlt man unter Rühren auf RT ab und erhält ein nahezu farbloses Polyisocyanat mit einem NCO-Wert von 17,6 %.
Gew. % Polyalkylenoxidpolyethercarbonsäure bezogen auf Einsatzstoffe: 14,9 %
NCO-Funktionalität (gemäß GPC): 3,6

**Beispiel 4**

700 g (3,86 val) des Polyisocyanates A1 werden bei 140°C unter Rühren und unter trockenem Stickstoff vorgelegt und mit 119 g (0,08 val) der Polyalkylenoxidpolyethercarbonsäure 2 versetzt. Es setzt eine starke $CO_2$-Entwicklung ein, die nach etwa 2 h nachläßt. Man rührt solange bei der Temperatur, bis der nach Formel [1] theoretisch ermittelte NCO-Wert von 19 % erreicht ist. Dann kühlt man unter Rühren auf RT ab und erhält ein nahezu farbloses Polyisocyanat mit einem NCO-Wert von 18,8 %.
Gew. % Polyalkylenoxidpolyethercarbonsäure bezogen auf Einsatzstoffe: 14,5 %
NCO-Funktionalität (gemäß GPC): 3,4

**Beispiel 5 (Abmischung mit hydrophoben Polyisocyanat)**

500 g (2,08 val) des in Beispiel 2 erhaltenen Polyisocyanates werden mit 20 g (0,24 val) 4-Isocyanatomethyl-1.8-octandiisocyanat unter Rühren und unter trockenem Stickstoff für zwei Stunden vermengt. Man erhält ein nahezu farbloses erfindungsgemäßes Isocyanat mit einem NCO-Wert von 18,7 %.
Gew. % Polyalkylenoxidpolyethercarbonsäure bezogen auf Einsatzstoffe: 13,9 %
NCO-Funktionalität (gemäß GPC): 3,4

**Beispiel 6 (Mitverwendung von Polyetheralkohol)**

1000 g (5,13 val) des Polyisocyanates A2 werden bei 130°C unter Rühren und unter trockenem Stickstoff vorgelegt und mit 100 g (0,067 val) der Polyalkylenoxidpolyethercarbonsäure P2 versetzt. Es setzt eine starke $CO_2$-Entwicklung ein die nach etwa 2 h nachläßt. Man rührt solange bei der Temperatur, bis der nach Formel [1] theoretisch ermittelte NCO-Wert von 19,1 % erreicht ist. Dann kühlt man unter Rühren auf 70°C ab und gibt 20 g (=0,04 val) eines auf Methanol gestarteten, monofunktionellen Polyethylenoxidpolyetheralkohols eines mittleren Molekulargewichtes von 500 zu und rührt solange bei dieser Temperatur bis der NCO-Wert von 18,6 % erreicht ist. Dann kühlt man unter Rühren auf RT ab und erhält ein nahezu farbloses Polyisocyanat mit einem NCO-Wert von 18,6 %.
Gew. % Polyalkylenoxidpolyethercarbonsäure bezogen auf Einsatzstoffe: 10,7 %
NCO-Funktionalität (gemäß GPC): 3,5

**Beispiel 7 (Rückspaltstabilität)**

100 g des erfindungsgemäßen Polyisocyanates gemäß Beispiel 2 mit einem Anteil von monomeren freiem HDI von 0,1 % werden für 21 d auf 50°C erwärmt. Anschließend wird der Anteil von monomeren freien HDI nochmals bestimmt.
Anteil monomeres freies HDI nach 21 d Lagerung bei 50°C : 0,1 %

**Beispiel 8 (Herstellung von Emulsionen)**

Je 50 g der erfindungsgemäßen Polyisocyanate aus Beispiel 1,2,3,4,5 und 6 werden in einem Erlenmeyerkolben mit 120 g entionisiertem Wasser versetzt und durch leichtes Rühren von Hand in eine feinteilige, blaustichige Emulsion überführt. Die Emulsion ist nach einer Standzeit von 48 h noch stabil und zeigt keinerlei Ausfällungen oder Bodensatz.

**Beispiel 9 (Verwendung)**

Aus einem Stammlack, bestehend aus 53 Gew.-Teilen eines Polyacrylatpolyols, hergestellt durch Polymerisation von 16,40 % Methylmethacrylat, 10,87 % Butylacrylat, 10,26 % Hydroxyethylmethacrylat, 1,04 % Acrylsäure in Gegenwart von 0,87 % Ditert-butylperoxid als Initiator in Desmophen® A 160 (Fa. Bayer AG), mit einer OH-Zahl von 99 [mg KOH/g Substanz (bezogen auf Festharz)], 1,22 Gew.-Teilen eines handelsüblichen Verlaufsmittels (Surfynol® 104, Fa. Air Products N.L., 50% ig in Butylglykol), 0,16 Gew.-Teilen eines handelsüblichen Verdickers (Borchigel® PW 25, Fa. Borchers, 25% ig in Propylenglykol/Wasser), 1,22 Gew.-Teilen eines handelsüblichen Slip Additivs (Baysilone® VP AI 3468:3466; 3:7, Fa. Bayer AG, 10 %ig in Butoxyl), und 80 % 100 % igen Lösungen, beispielsweise in Butoxyl, der gemäß Beispiel 1 und 6 erhaltenen erfindungsgemäßen Polyisocyanatgemische sowie des Vergleichspolyisocyanats V1 wurden Klarlacke formuliert. Dabei wurden die Polyisocyanatkomponenten und der Stammlack jeweils im NCO/OH-Äquivalentverhältnis von 1,5:1 eingesetzt.

Die so erhaltenen Klarlackformulierungen wurden mit einem Aufziehrahmen auf eine Glasplatte aufgerakelt. Nach einer kurzen Ablüftzeit wurden die Filme im Trockenschrank zunächst bei 60°C für 30 Minuten getrocknet und anschließend für zwei Stunden bei RT gelagert. Als Maß für die Antrocknung des Filmes wird dessen Härte gemäß Pendeldämpfung nach König angegeben (DIN 53 157).

Tabelle 1

|  | Polyisocyanat gemäß Beispiel 1 | Polyisocyanat gemäß Beispiel 6 | Vergleichspolyisocyanat V1 |
|---|---|---|---|
| Pigmentierung | Klarlack | Klarlack | Klarlack |
| Pendelhärte 30 min 60°C + 2 h | 25" | 24" | 18" |
| Transparenz | 0 | 0 | 0 |
| Haze/Glanz 20° | 19/85 | 20/83 | 21/84 |
| Trocknung 30 min 60°C + 2 h | 1 | 1 | 2 |
| Bewertungsschlüssel für Tabelle 1: 0 = positiv; 5 = negativ | | | |

Die Beständigkeit der so erhaltenen Lackfilme wurde mit verschiedenen Lösungsmitteln untersucht (Tab. 2).

Dazu wird auf den ausgehärteten Lackfilm ein mit Lösemittel getränkter Wattebausch aufgebracht und die Stelle mit einem Uhrglas abgedeckt. Nach einer festgelegten Zeit (Einwirkzeit) werden Uhrglas und Wattebausch entfernt und eventuell verbliebene Lösemittelreste mit einem Zellstofftuch vorsichtig abgetupft. Das durch Lösemitteleinwirkung belastete Lackfilmsegment wird visuell beurteilt.

Tabelle 2

|  | Polyisocyanat gemäß Beispiel 1 | Polyisocyanat gemäß Beispiel 6 | Vergleichspolyisocyanat V1 |
|---|---|---|---|
| Lösungsmittelbeständigkeit 30 min 60°C + 2 h Isopropanol/Wasser 1:1 | 1 2 | 1 1 | 1 2 |
| Butylglykol Methoxypropylacetat / Xylol 1:1 | 1 | 1 | 1 |
| Bewertungsschlüssel für Tabelle 2: 0 = Film ist nach Behandlung unverändert 1 = Film behält nach Behandlung bleibenden Rand 2 = Film ist ankratzbar 3 = Film ist abkratzbar 4 = Film ist völlig zerstört | | | |

Die Tabelle 1 und 2 zeigen, dass sich das erfindungsgemäße Polyisocyanat gemäß Beispiel 1 mit einem gleichen Anteil an Hydrophilierungsreagenz wie das Vergleichspolyisocyanat V1 durch eine höhere Anfangshärte und eine verbesserte Antrocknung auszeichnet, während alle anderen Eigenschaften auf gleich gutem Niveau verbleiben.

**Patentansprüche**

1. Wasserdispergierbare Polyisocyanatgemische auf Basis Uretdion-, Isocyanurat-, Allophanat-, Biuret-, Iminooxadiazindion- und/oder Oxadiazintrionstrukturen aufweisender Polyisocyanate, die aus mindestens zwei aliphatischen, cycloaliphatischen, araliphatischen und/oder aromatische Diisocyanaten aufgebaut sind, sowie mindestens eine Carbonsäuregruppe enthaltenden Polyalkylenoxidpolyethern **dadurch gekennzeichnet, dass** die Verknüpfung des hydrophilierenden Reagenzes durch Reaktion zwischen Isocyanat und Carbonsäuregruppe unter anteiliger Ausbildung von acylierten Harnstoffgruppen und Amidbindungen erfolgt.

2. Verfahren zur Herstellung wasserdispergierbarer Polyisocyanatgemische, **dadurch gekennzeichnet ist, dass**

   A) eine Polyisocyanatkomponente auf Basis Uretdion-, Isocyanurat-, Allophanat-, Biuret-, Iminooxadiazindion- und/oder Oxadiazintrionstrukturen aufweisender Polyisocyanate, die aus mindestens zwei aliphatischen, cycloaliphatischen, araliphatischen und/oder aromatische Diisocyanaten aufgebaut sind, sowie
   B) ein mindestens eine Carbonsäuregruppe enthaltender Polyalkylenoxidpolyether so miteinander umsetzt werden,

   dass die Verknüpfung des hydrophilierenden Reagenzes durch Reaktion zwischen Isocyanat und Carbonsäuregruppe unter anteiliger Ausbildung von acylierten Harnstoffgruppen und Amidbindungen erfolgt.

3. Verfahren gemäß Anspruch 2, **dadurch gekennzeichnet, dass** die Ausgangskomponenten A) und B) bei Temperaturen von 25 bis 240°C umgesetzt werden, dass die Verknüpfung der mindestens eine Carbonsäuregruppen enthaltenden Polyethylenoxidpolyether B) mit der Polyisocyanatkomponente A) durch Reaktion zwischen NCO und COOH-Gruppen unter Abspaltung von $CO_2$ und anteiliger Bildung von Amid und Acylharnstoffgruppen und zur Reaktion der Komponente A) mit der Komponente B) die Komponente A) unter Rühren und Einleitung von trockenem Stickstoff vorgelegt wird und die Komponente B) unter Rühren zugegeben wird.

4. Verfahren gemäß Anspruch 2, **dadurch gekennzeichnet, dass** man als Polyisocyanatkomponente A) ein Isocyanuratgruppen aufweisendes Polyisocyanat auf Basis von 1,6-Diisocyanatohexan, 1-Isocyanato-3,3,5-trimethyl-5-isocyanatomethylcyclohexan und/oder 4,4'-Diisocyanatodicyclohexylmethan einsetzt.

5. Verwendung der Polyisocyanatgemische gemäß Anspruch 1 als Ausgangskomponente bei der Herstellung von Polyurethankunststoffen.

6. Verwendung der Polyisocyanatgemische gemäß Anspruch 1 als Vemetzerkomponente für wasserlösliche oder -dispergierbare Lackbindemittel oder Lackbindemittelkomponenten bei der Herstellung von Überzügen unter Verwendung von wäßrigen Beschichtungsmitteln auf Basis derartiger Bindemittel oder Bindemittelkomponenten.

**Claims**

1. Water-dispersible polyisocyanate mixtures based on polyisocyanates having uretdione, isocyanurate, allophanate, biuret, iminooxadiazinedione and/or oxadiazinetrione structures and prepared from at least two aliphatic, cycloaliphatic, araliphatic and/or aromatic diisocyanates, and on polyalkylene oxide polyethers containing at least one carboxylic acid group, **characterized in that** the hydrophilicizing reagent is linked by reaction between isocyanate and carboxylic acid group with proportional formation of acylated urea groups and amide bonds.

2. Process for preparing water-dispersible polyisocyanate mixtures, **characterized in that**

   A) a polyisocyanate component based on polyisocyanates having uretdione, isocyanurate, allophanate, biuret, iminooxadiazinedione and/or oxadiazinetrione structures and prepared from at least two aliphatic, cycloaliphatic, araliphatic and/or aromatic diisocyanates, and
   B) a polyalkylene oxide polyether containing at least one carboxylic acid group are reacted together

   such that the hydrophilicizing reagent is linked by reaction between isocyanate and carboxylic acid group with proportional formation of acylated urea groups and amide bonds.

3. Process according to Claim 2, **characterized in that** the starting components A) and B) are reacted at temperatures from 25 to 240°C, **in that** the linking of the polyethylene oxide polyethers B) containing at least one carboxylic acid group with the polyisocyanate component A) takes place by reaction between NCO and COOH groups with elimination of $CO_2$ and proportional formation of amide and acylurea groups and, for the reaction of component A) with component B), component A) is introduced initially with stirring and introduction of dry nitrogen and component B) is added with stirring.

4.  Process according to Claim 2, **characterized in that** polyisocyanate component A) is a polyisocyanate containing isocyanurate groups and is based on 1,6-diisocyanatohexane, 1-isocyanato-3,3,5-trimethyl-5-isocyanatomethylcyclohexane and/or 4,4'-diisocyanatodicyclohexylmethane.

5.  Use of the polyisocyanate mixtures according to Claim 1 as a starting component in preparing polyurethane plastics.

6.  Use of the polyisocyanate mixtures according to Claim 1 as a crosslinker component for water-soluble or water-dispersible paint binders or paint binder components in the production of coatings using aqueous coating compositions based on such binders or binder components.

**Revendications**

1.  Mélanges de polyisocyanates dispersables dans l'eau à base de polyisocyanates comportant une structure uretdione, isocyanurate, allophanate, biuret, iminooxadiazinedione et/ou oxadiazinetrione, qui sont constitués d'au moins deux diisocyanates aliphatiques, cycloaliphatiques, araliphatiques et/ou aromatiques, ainsi que de polyéthers d'oxyde de polyalkylène comportant au moins un groupe d'acide carboxylique, **caractérisés en ce que** la liaison du réactif rendant hydrophile a lieu par réaction entre l'isocyanate et le groupe d'acide carboxylique avec formation proportionnelle de groupes urée acylés et de liaisons amidiques.

2.  Procédé de production de mélanges de polyisocyanates dispersables dans l'eau, **caractérisé en ce que** l'on fait réagir ensemble

    A) un composant polyisocyanate à base de polyisocyanates comportant une structure uretdione, isocyanurate, allophanate, biuret, iminooxadiazinedione et/ou oxadiazinetrione, qui sont constitués d'au moins deux diisocyanates aliphatiques, cycloaliphatiques, araliphatiques et/ou aromatiques, ainsi qu'un
    B) polyéther d'oxyde de polyalkylène comportant au moins un groupe d'acide carboxylique,

    de telle manière que la liaison du réactif hydrophile ait lieu par réaction entre l'isocyanate et le groupe d'acide carboxylique avec formation proportionnelle de groupes urée acylés et de liaisons amidiques.

3.  Procédé selon la revendication 2, **caractérisé en ce que** l'on fait réagir les composants de départ A) et B) à des températures comprises entre 25 et 240 °C, que la liaison du polyéther d'oxyde de polyéthylène comportant au moins un groupe d'acide carboxylique B) avec le composant polyisocyanate A) a lieu par réaction entre les groupes NCO et COOH avec libération de $CO_2$ et formation proportionnelle de groupes amide et acylurée et que pour la réaction du composant A) avec le composant B), le composant A) est présenté sous agitation et introduction d'azote sec et le composant B) est ajouté sous agitation.

4.  Procédé selon la revendication 2, **caractérisé en ce que** l'on met en oeuvre comme composant polyisocyanate A), un polyisocyanate comportant des groupes isocyanurate, à base de 1,6-diisocyanatohexane, 1-isocyanato-3,3,5-triméthyl-5-isocyanatométhylcyclohexane et/ou 4,4'-diisocyanatodicyclohexylméthane.

5.  Utilisation des mélanges de polyisocyanates selon la revendication 1 comme composant de départ pour la production de plastiques polyuréthaniques.

6.  Utilisation des mélanges de polyisocyanates selon la revendication 1 comme composant réticulant pour des liants ou des composants de liants pour peintures ou vernis solubles ou dispersables dans l'eau, pour la réalisation d'enduits, en utilisant des agents d'enduction aqueux à base de ce genre de liants ou de composants de liants.